# EUROPEAN PATENT APPLICATION

(11) **EP 1 134 451 A2**
(43) Date of publication of application: **19.09.2001**
(21) Application number: 01106542.2
(22) Date of filing: 15.03.2001
(51) Int. Cl.: F16G 3/10

(54) **Method for splicing a belt**

(30) Priority: 15.03.2000 US 189504 P
(71) Applicant: CONVEYOR SERVICES CORPORATION, Blairsville PA 15717 (US)
(72) Inventor: Dolan, Troy D., Blairsville PA 15717 (US); Gibson, Joseph, Blairsville PA 15717 (US)
(74) Representative: Celestino, Marco

(57) **Abstract**

The invention is a method of splicing two damaged ends (11) of a conveyor belt (10) together such that the resultant spliced belt is stronger than typical splice methods. The damaged belt (10) is cut apart and the ends (11) are prepared so that the ends may be spliced together. The belt ends (11) are stripped of the rubber coating that covers the cord core (12) through cutting or abrading the coating away. The belt ends (11) can be prepared in any fashion from blunt end cuts to stepping the cut of the core (12) such that the steps (15) of one end of the belt (10) complement the steps (15) of the other end of the belt (10). The prepared belt (10) ends (11) are mated together and sewn (13). A new layer of rubber (14) is then placed over the sewn (13) portion of the belt (10). The new layer of rubber (14) is then vulcanized, through either hot or cold vulcanization techniques. The resultant sewn (13) and vulcanized belt (10) is a stronger belt than a belt repaired by only mechanical or vulcanization methods.

## Description

### Field of the invention

This invention relates generally to the art of splicing ends of belts together, especially conveyor belts or power belts made of belt material having a cord core and covered with rubber or a rubber-like material. The invention also relates to the spliced belt that results from this method.

### Background of the invention

Conveyor belts can become damaged or torn during use, especially if such use is the transport of heavy or sharp material. It is not appropriate to use a damaged or torn belt while conveying material; thus, a method to repair the belt is needed. Typical methods practiced in the art are either the use of a mechanical splice or the use of a process called vulcanization.

Vulcanization is the process of treating crude or synthetic rubber or a similar plastic material to give the material useful properties such as elasticity, strength and stability. One typical treatment includes the use of chemicals, such as Tip Top™ CRV 5 in combination with Tip Top™ SC 2000 cement and RF Hardener, to alter the material. This is referred to as cold vulcanization. Another typical treatment includes the use of heat to alter the material. This is referred to as hot vulcanization.

Both hot and cold vulcanization processes require a period of time after the vulcanization treatment to allow the material to cure and harden in order to be used in the particular application. This curing process can require a lengthy period of time. In addition, certain atmospheric conditions are required for the curing process to occur correctly, including the particle content, humidity and temperature of the atmosphere. In addition, the drying time for cold vulcanization can depend on the amount of fabric impregnation of the chemicals used in cold vulcanization. Often, the conveyor belt will have to be removed from the conveyance system and transported to a repair site for a period of time. The problem with both hot and cold vulcanization is that to completely repair the belt using only vulcanization methods requires a lengthy period of time and atmospheric conditions that may not achievable throughout the curing process. Repairing a conveyor belt with only vulcanization methods results in long periods of down time for the conveyor belt and for the conveyance system.

Mechanical splices can involve sewing the belt ends together or inserting splicing clips or metal fasteners to join the ends of the belt. However, mechanical splices cause protuberances in the belt, i.e., the belt no longer lies smooth as it moves over the rollers and through the support equipment. This can cause serious damage to the support equipment since most support equipment is designed for smooth belts. Such protuberances also cause damage to scraping blades by jolting the scraper blades whenever the blade contacts the protruding area of the belt. The mechanical splices also result in faster wearing times for the scraper blades. In addition, the mechanical splices tend to have a high failure rate since the clips or fasteners are jostled almost constantly and, therefore come loose and require an additional repair to the conveyor belt. Thus, although quick and easy to effect, mechanical splices can also result in costly repairs to support equipment for the conveyor belt and down time of the entire conveyance system.

### Summary of the invention

It is an object of this invention to provide a splicing method that results in a belt that is stronger and more durable than a spliced belt using typical splice methods such as only vulcanization or mechanical splicing techniques.

It is also an object of the present invention to provide splicing method that results in a belt repair that is smooth and even in thickness to prevent damage to the belt's supporting equipment and scraper blades.

It is further an object of the present invention to provide a splicing method that takes less time than a splice made through a vulcanization process.

For the purposes of describing the invention, the splicing of a conveyor belt will be discussed, although one skilled in the art will recognize that this invention can be applied to any belt that has a cord core and rubber (or rubber like) coating. Typical types of conveyor belts are 2-ply belts, 3-ply belts or US Flex II (660 P.I.W.) belts. These and similar belts are well known to those well versed in the art. These types of belts form a continuous loop that is placed on roller to convey materials from one place to another. The continuous loop belt contacts other pieces of equipment such as rollers and, most likely, scraper blades that are used to assist in the removal of the materials from the conveyor belt.

According to the invention, the damaged belt is cut apart and the ends are prepared so that the ends may be spliced together. Such preparation includes removing any frayed ends of the belt. The belt ends are stripped of the rubber coating that covers the cord core through cutting or abrading the coating away.

The belt ends can be prepared in any fashion from blunt end cuts to stepping the cut of the core such that the steps of one end of the belt complement the steps of the other end of the belt. Any method of preparing the belt ends that will allow the ends to be sewn together is suitable for use with the subject method and resultant belt. In a most preferred embodiment, the belt ends are stepped to complement each other.

In a first embodiment of the invention, the belt ends are arranged so that the ends mate. The ends are then sewn together. A new layer of rubber is placed over the sewn area and the new layer of rubber is then vulcanized, either through hot or cold vulcanization processes known in the art. The resultant vulcanized area should be the same thickness as the remainder of the belt.

In an alternative embodiment of the invention, the belt ends are arranged, again, so that the ends mate. The belt ends are then vulcanized together, either through hot or cold vulcanization processes known in the art. The belt ends are then sewn over the vulcanized portion. A new layer of rubber is then placed over the sewn area and the new layer of rubber is vulcanized, either through hot or cold vulcanization processes. Again, the resultant vulcanized area should be the same thickness as the remainder of the belt.

The splicing process of the instant invention requires less time than repairing the belt through a typical vulcanization process. The splicing process of the instant invention also obviates the typical problems associated with typical mechanical splices. The resultant belt from either of the two above-described embodiments is a stronger belt than using only a vulcanized or mechanical splice.

### Brief description of the drawings

These and other objects, features and advantages of the present invention will become readily apparent to those having ordinary skill in the art in view of the following detailed description in view of the several drawing figures and appended claims.
- Fig. 1A is a side view of a belt with blunt ends.
- Fig. 1B is a top view of the belt of Fig. 1A, with the blunt ends sewn together.
- Fig. 1C is a side view of the belt of Fig. 1B, with the new layers of rubber ready to be placed over the sewn area.
- Fig. 1D is a top view of the sewn, vulcanized belt.
- Fig. 2A is a side view of a belt with stepped ends.
- Fig. 2B is a top view of the belt of Fig. 2A, with the stepped ends sewn together.
- Fig. 2C is a side view of the belt of Fig. 2B, with the new layers of rubber ready to be placed over the sewn area.
- Fig. 2D is a top view of the sewn, vulcanized belt.

### Description of a preferred embodiment

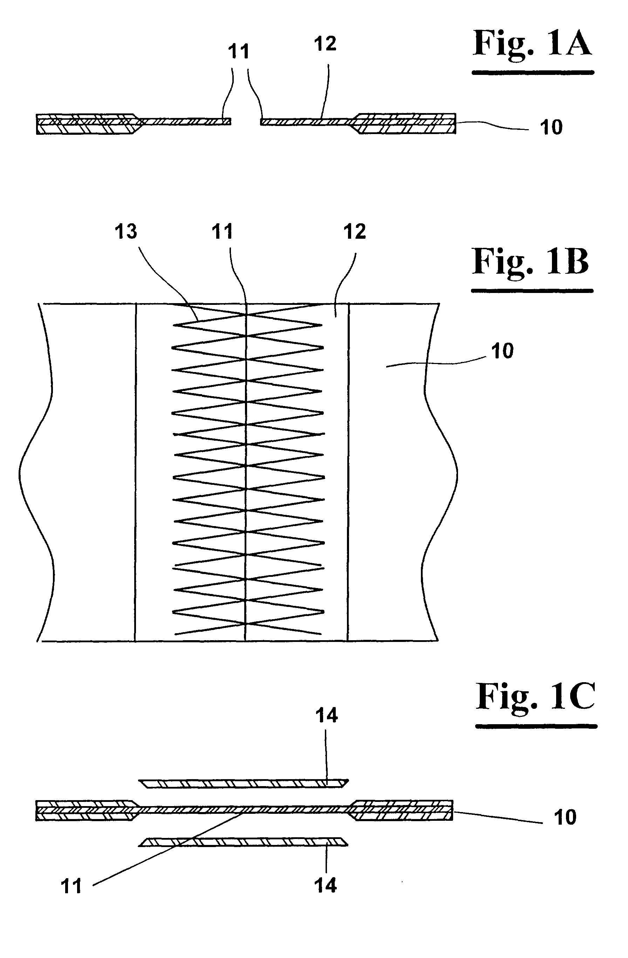

With reference to the drawings, the reader should understand that like reference numerals in different drawings refer to the like elements of the invention. Figure 1A shows a damaged belt 10 that has been prepared by removing the frayed ends from the belt and stripping rubber coating from the damaged area down to the cord core 12. The ends of the belt in Figure 1A are cut to blunt ends 11 that are to be mated together. The blunt ends are then sewn together, resulting in the belt shown in Figure 1B. In an alternate embodiment, the blunt ends can be vulcanized together, then sewn together, again resulting in a belt that looks similar to Figure 1B. Those familiar with the art will realize that the ends may be sewn by hand or by utilizing appropriate machines.

It should be apparent to one skilled in the art that many different sewing patterns can be used to join the ends together, for example, square, figure eight or circle patterns may be used. A most preferred embodiment of the invention uses the diamond shaped pattern 13, as shown in Figure 1B.

In a preferred embodiment, the portion of the belt that will be sewn should include not only the portion of the belt closest to the mated area but also most of the exposed cord core 12 of the belt 10. The mated ends of the belt are the weakest sections of the belt. Sewing over the exposed cord core 12 of the belt ensures that the ends will stay together since the sewing includes stronger portions of the belt that will resist the forces pulling the ends of the belt apart.

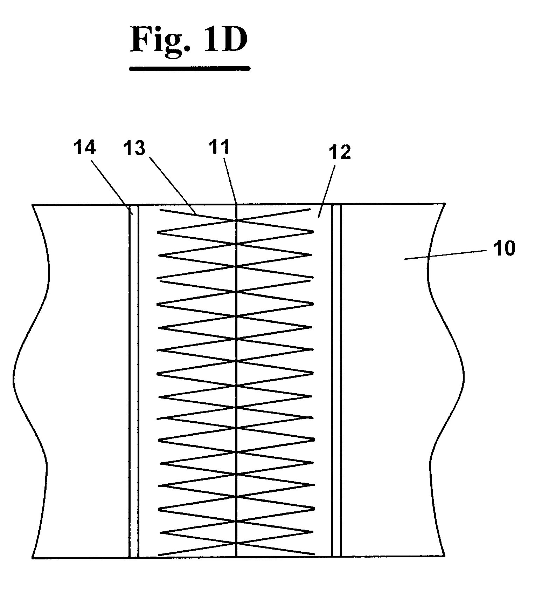

Once the ends of the belt are sewn together, a new layer of rubber 14 is cut to the same length and width as the exposed area of the conveyor belt. The new layer of rubber 14 is placed over the sewn portion on both sides of the conveyor belt 10, as shown in Figure 1C. The new layer of rubber is then vulcanized, through either hot or cold vulcanization techniques. Figure 1D demonstrates the sewn vulcanized belt with mated blunt ends 11. The resultant repaired portion of the belt should be the same thickness as the remainder of the belt.

In cold vulcanization, the layer of rubber and some of the surrounding belt rubber is treated with a chemical cement and hardener. One such cement and hardener is called Tip Top™. The cement/hardener mixture impregnates the rubber layer and mixes the rubber layer with the surrounding belt rubber so that a seamless joining is affected. The cement/hardener mixture must be applied more than one time, with the cement/hardener mixture drying completely in between coats. In hot vulcanization, heat is applied to the layer of rubber and some of the surrounding belt rubber. The heat melts the rubber and allows the layer of rubber to mix with the surrounding belt rubber. The rubber is allowed to cool and a seamless joining is affected.

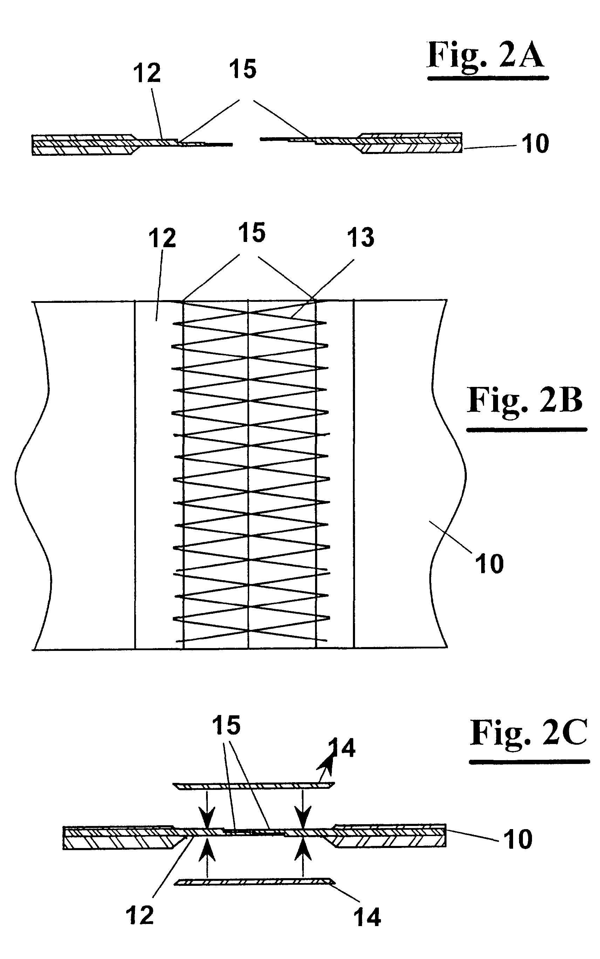

Figure 2A shows a damaged belt that has been prepared by removing the frayed ends from the belt. In a preferred embodiment of the invention, the ends 15 of the belt in Figure 2A are cut into steps that are to be mated together. The ends 15 are stepped so that when the ends 15 are placed together they overlap, as seen in figure 2C. This results in numerous places where the belt ends mate, rather than the one location of the blunt ends. The stepped ends are then sewn together, resulting in the belt shown in Figure 2B. In an alternate embodiment, the stepped ends can be vulcanized together, then sewn together, again resulting in a belt that looks similar to Figure 2B.

It should be apparent to one skilled in the art that many different sewing patterns can be used to join the stepped ends 15 together, for example, square, figure eight or circle patterns may be used. A most preferred embodiment of the invention uses the diamond shaped pattern 13, as shown in Figure 2B. In a preferred embodiment, again as seen in figure 2B, the portion of the belt that will be sewn spans the entire area of the stepped ends 15 into the cord area 12 of the exposed belt. Free ends sewn together eliminate peeling and add strength to the splice via power transmission through the sewing thread. Those well versed in the art will recognize that different step lengths and threading material will be required for different belt widths and thicknesses.

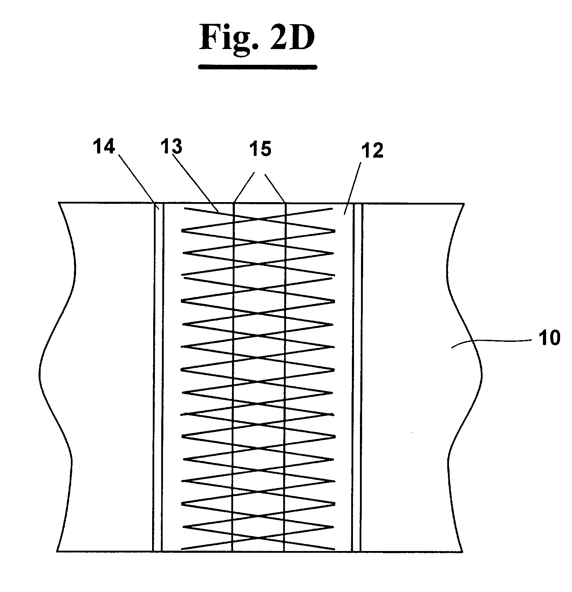

Once the ends of the belt are sewn together, a new layer of rubber 14 is cut to the same length and width as the exposed area of the conveyor belt. The new layer of rubber is placed over the sewn portion on both sides of the conveyor belt, as shown in Figure 2C. The new layer of rubber is then vulcanized, through either hot or cold vulcanization techniques. The resultant repaired portion of the belt should be the same thickness as the remainder of the belt. Figure 2D demonstrates the sewn vulcanized belt 10 with mated stepped ends 15 as seen in a top view.

Although, for convenience, the method and resultant apparatus of the present invention has been described hereinabove primarily with respect to its preferred embodiments, it will be apparent to those skilled in the art that many variations of this invention can be made without departing from the spirit of the invention as claimed.

## Claims

1. A method for splicing a damaged conveyor belt, said belt (10) comprising a cord core (12) and an upper and lower surface, each of said upper and lower surfaces having a coating, comprising the steps of:
a) cutting apart the damaged belt (10) creating a first and a second broken end (11),
b) preparing said first and second broken ends (11) by removing frayed material from said ends (11) and stripping the coating that covers the cord core (12) in and around an area surrounding said broken ends (11),
c) mating said first and second broken ends (11) together,
d) sewing (13) said first and second broken end together with a sewing pattern,
e) applying a layer of rubber (14) over the said sewn (13) area and vulcanizing said layer of rubber (14).

2. A method for splicing a damaged conveyor belt (10) according to claim 1, wherein said layer of rubber (14) is applied contiguously over the said sewn (13) broken ends (11) and said surrounding area on both surfaces of said belt (10).

3. A method for splicing a damaged conveyor belt (10) according to claim 1, wherein before said step of sewing (13) a step of vulcanizing the said mated first and second broken ends (11) is provided.

4. A method for splicing a damaged conveyor belt (10) according to claims 1 to 3, wherein said sewing pattern (13) is a diamond-shaped pattern.

5. A method for splicing a damaged conveyor belt (10) according to claims 1 to 3, wherein said first and second broken ends (11) are blunt ends.

6. A method for splicing a damaged conveyor belt (10) according to claims 1 to 3, wherein said first and second broken ends (11) are stepped ends.

7. A method for splicing a damaged conveyor belt (10) according to claims 1 to 3, wherein said stepped ends (11) are prepared such that the steps (15) of one end of the belt complement the steps (15) of the other end of the belt (10).

8. A method for splicing a damaged conveyor belt (10) according to claims 1 to 3, wherein said vulcanisation of said vulcanising step is chosen among: cold vulcanisation, hot vulcanisation.

9. A conveyor belt (10) comprising a cord core (12) and an upper and lower surfaces, each of said upper and lower surfaces having a coating, produced by a method according to claims 1 to 8.

10. The conveyor belt (10) of claim 9, wherein said coating is made of rubber (14) or rubber (14)-like material.
